# EUROPÄISCHE PATENTSCHRIFT

(11) **EP 1 798 147 B1**
(45) Veröffentlichungstag und Bekanntmachung des Hinweises auf die Patenterteilung: **01.07.2009**
(21) Anmeldenummer: 06125726.7
(22) Anmeldetag: 08.12.2006
(51) Int. Cl.: B65B 31/00, F25D 3/12, A23L 3/36, A23L 3/3418, A23B 7/04, A23B 7/148

(54) **Behälter zum Transportieren von Waren unter kontrollierter oder modifizierter Atmosphäre**
Container for transporting articles under controlled or modified atmosphere
Conteneur pour transporter des marchandises sous atmosphère contrôlée ou modifiée

(30) Priorität: 14.12.2005 DE 102005059627
(43) Veröffentlichungstag der Anmeldung: 20.06.2007
(73) Patentinhaber: Messer Group GmbH, 65843 Sulzbach (DE)
(72) Erfinder: De Cneudt, Peter, 3052 Blanden (BE)
(74) Vertreter: Münzel, Joachim R.

(56) Entgegenhaltungen:
- EP-A1- 0 368 839
- EP-A2- 0 437 419
- EP-A2- 0 823 600
- DE-A1- 2 919 900
- GB-A- 1 325 008
- US-A- 5 658 607

## Beschreibung

Für die Verpackung von Lebensmitteln werden so genannte Schutzgasverpackungen verwendet. Dabei wird die Verpackung vor dem Verschließen mit einem Inertgas oder einer Mischung aus verschiedenen inerten Gasen, wie Stickstoff, Sauerstoff oder Kohlendioxid, gespült. Hierdurch soll in erster Linie Luft aus der Verpackung abgezogen werden. Bekannte Beispiele hierfür sind Frischfleisch, Kartoffelchips u.a. Bei dieser als "Modifizierte Atmosphäre" bekannten Art der Verpackung ändert sich die Atmosphäre in der Verpackung im Laufe der Zeit nur geringfügig in Abhängigkeit von der Gasdichtheit der verwendeten Verpackung. Anders sieht es bei der Verpackung von chemisch aktiven Waren aus. So verbrauchen so genannte "atmende" Waren wie beispielsweise Fertigsalat, Broccoli u. dergl. Sauerstoff und erzeugen CO₂. Die Atmosphäre, die sich in der Verpackung einstellt, ist hierbei in der Regel auch modifiziert ("Modifizierte Atmosphäre"; MA). Die Zusammensetzung der Atmosphäre hängt insbesondere von den Eigenschaften der Ware, der verwendeten Verpackung und der Temperatur ab.

Zum Transport von Waren unter modifizierter Atmosphäre werden die Waren in der Regel mit aufwändigen Maschinen unter Vakuum verpackt, anschließend verschweißt und mit einer Schutzgasatmosphäre versehen. Beispiele für entsprechende Verpackungsmaschinen sind in der EP 1 106 084 A2 und in der WO 01/56888 A1 angegeben. Dieses Verfahren ist jedoch nachteilig, wenn die Waren beim Händler offen angeboten werden sollen, wie beispielsweise Obst und Gemüse, da der Empfänger der Ware die Verpackung zeitaufwändig und umständlich entfernen muss.

Aus der EP 0 368 839 A1 ist ein Behälter zum Aufbewahren von biologischen Substanzen, insbesondere Lebensmitteln, wie Fleisch, Backwaren, Obst oder Gemüse bekannt. Zur Verlängerung der Haltbarkeit werden die Substanzen in einem Raum unter Unterdruck gelagert. Zur Kontrolle der Feuchtigkeit ist ein Sensor vorgesehen, der bei Überschreiten eines Feuchtigkeitsgrenzwertes ein Signal zum Betätigen einer mit dem Behälter verbundenen Vakuumpumpe abgibt. Eine gezielt im Behälter erzeugte modifizierte Atmosphäre ist bei diesem Gegenstand jedoch nicht vorgesehen.

Aus der DE 29 19 900 A1 ist ein Behälter zum Transportieren von Waren bekannt, der eine gasdicht verschließbare Kammer und einen Sauganschluss zum Anschließen der Kammer an eine Saugeinrichtung aufweist. Nach dem Einladen der Waren wird in der Kammer ein Vakuum erzeugt, durch welche die Waren frisch gehalten werden können, ohne dass die Waren hierzu vakuumverpackt sein müssen. Diese Druckschrift beschreibt jedoch weder die Erzeugung einer modifizierten oder kontrollierten Atmosphäre in der Kammer, noch ist eine Kühlung der Waren beim Transport möglich.

Aus der EP 10 48 228 B1 ist ein Kühlbehälter bekannt, der eine Kammer zum Aufbewahren der zu transportierenden Waren sowie ein Speichermodul zur Aufnahme von Trockeneis enthält. Während des Transports sublimiert das Trockeneis zu kaltem Kohlendioxidgas, das in die Aufbewahrungskammer einströmt und dort für eine sauerstoffarme und zugleich kalte Atmosphäre sorgt. Ähnliches gilt für einen aus der EP 0 823 600 A2 bekannten Gegenstand. Diese Druckschrift beschreibt einen fahrbaren Kühlbehälter für verderbliche Waren, die durch den Kälteinhalt von Trockeneis frisch gehalten werden. Das in einem Speichermodul gelagerte Trockeneis sublimiert während des Transports und strömt als kaltes Gas in einen Behälter ein, in dem sich die kühlenden Waren befinden. Nachteilig bei diesen Gegenständen ist, dass die die Waren umgebende Atmosphäre durch den Zustrom des Kohlendioxids verändert wird und nicht alle Waren für den Transport in einer Kohlendioxidreichen Atmosphäre geeignet sind.

Aufgabe der Erfindung ist es demnach, eine Möglichkeit zum Transportieren von Waren, insbesondere Lebensmitteln unter modifizierter Atmosphäre anzugeben, die einen sicheren Transport unter einer frei gewählten modifizierten Atmosphäre bei gleichzeitiger Kühlung der transportierten Waren gewährleistet, und die einfach in der Handhabung ist und ohne aufwändige Verpackungsmaschinen und Verpackungsmaterialen auskommt.

Gelöst ist diese Aufgabe mit einem Behälter zum Transportieren von Waren mit den Merkmalen des Anspruchs 1.

Entsprechend den aus der EP 0 368 839 A1 oder der DE 29 19 900 A1 bekannten Gegenständen umfasst der erfindungsgemäße Behälter also eine verschließbare Kammer, in der die Ware während des Transports aufgenommen wird. Über einen Gasanschluss wird, vor oder nach dem Befüllen mit der Ware, Gas aus einer externen Gasquelle zugeführt, beispielsweise stickstoffreiches Inertgas. Ergänzend kann über einen weiteren Gasanschluss gleichzeitig die innerhalb des Behälters vorhandene Atmosphäre abgesaugt werden ("Gas - Flushing"). Bei der Ankunft am Zielort wird die Kammer geöffnet, die Ware entnommen und der Behälter steht für eine neuerliche Befüllung zu Verfügung. Der erfindungsgemäße Transportbehälter eignet sich insbesondere für Ware, die beim Händler offen angeboten wird, wie beispielsweise Fisch, Frischfleisch, Fleischwaren, Fertigmahlzeiten und Gemüse, er ist jedoch auch für andere empfindliche Waren geeignet, beispielsweise für pharmazeutische oder chemische Produkte.

Der erfindungsgemäße Behälter ist zudem mit einer Kältequelle thermisch verbindbar, wobei als Kältequelle ein von der Kammer gasdicht getrenntes Speichermodul für ein kryogenes Kältemittel vorgesehen ist. Damit ist es möglich, beim Transport unter modifizierter Atmosphäre die Temperatur einzustellen und zu kontrollieren. Die Kammer ist dabei lediglich thermisch mit der Kältequelle verbunden; ein Gasaustausch zwischen der Kältequelle und der Kammer findet nicht statt. Vom Speichermodul ist die Kammer durch eine gasdichte, druckfeste, jedoch thermisch leitende Wand getrennt. Die Temperatur ist gerade beim Transport von atmenden Waren ein wesentlicher Parameter, um die Aktivität der Ware und damit die Zusammensetzung der modifizierten Atmosphäre zu beeinflussen. Bei der Kältequelle handelt es sich beispielsweise um ein Kühlaggregat oder eine kryogene Kältequelle, bei der ein kaltes gasförmiges oder verflüssigtes Gas als Kälteträger dient.

Bevorzugt handelt es sich bei der Kältequelle um ein im Behälter angeordnetes, mit Trockeneis gefülltes Speichermodul, das von der Kammer, in der die Ware gelagert ist, und somit von der modifizierten Atmosphäre gasdicht getrennt ist. Trockeneis besitzt bei einem Druck von 1 bar eine Temperatur von -79°C und sublimiert unter Entstehung von gasförmigem Kohlendioxid. Die modifizierte Atmosphäre und/oder die Ware stehen mit dem Trockeneis in thermischem Kontakt und werden dadurch gekühlt.

Derartige Anordnungen zur Transportkühlung von Lebensmitteln sind beispielsweise aus der EP 0 823 600 B1 oder der EP 1 048 228 B1 bekannt. Bei den Gegenständen dieser Druckschriften wird das Speichermodul durch Entspannen von zugeführtem flüssigem Kohlendioxid mit Trockeneis befüllt, wobei während des Befüllvorgangs das bei der Entspannung entstehende Kohlendioxidgas durch eine separate Leitung aus dem Speichermodul abgesaugt wird. Während beim Gegenstand der EP 0 823 600 B1 ein nur geringer Gasaustausch zwischen dem Kohlendioxid im Kühlmodul und der Atmosphäre des die Ware enthaltenen Lagerbereichs stattfindet, dringt beim Gegenstand der EP 1 048 228 B1 kaltes Kohlendioxidgas in den Lagerbereich ein und kühlt diesen direkt, wodurch jedoch nicht nur die Zusammensetzung der Atmosphäre verändert wird, sondern zudem die gelagerten Lebensmittel unmittelbar mit dem sehr kalten Kältemittel in Berührung kommen.

Vorteilhafterweise ist die Kammer druckfest ausgestaltet. Damit kann die Ware auch unter einem Vakuum transportiert werden oder bei der Herstellung der modifizierten Atmosphäre kann vor dem Einleiten des Schutzgases ein Vakuum im Innern der Kammer hergestellt werden. Die Vakuumfestigkeit kann auch dazu genutzt werden, nacheinander sauerstoffreicheres Gas aus der Kammer abzusaugen und anschließend inertes Gas einzufüllen. Um eine möglichst reine modifizierte Atmosphäre zu erzeugen kann dieser Vorgang auch mehrfach hintereinander wiederholt werden.

In einer weiter vorteilhaften Ausgestaltung der Erfindung ist die Kammer trennbar mit dem Behälter verbunden und kann als separates und separat vom Behälter befüll- und entleerbares Modul in diesen eingestellt werden. Bevorzugt weist die Kammer dabei thermisch gut leitende Wände oder Wandabschnitte auf und kann beispielsweise in den Lagerbereich eines der oben genannten Anordnungen zur Transportkühlung eingebracht werden. Im Falle einer Anordnung, wie sie aus der EP 1 048 228 B1 bekannt ist, führt dies dazu, dass die Kammer im Lagerbereich vom verdampfenden Kältemittel umspült wird, ohne dass die in der Kammer vorhandene Atmosphäre mit dem Kältemittel vermischt wird.

Zweckmäßigerweise werden mehrere separate, gasdicht voneinander getrennte Kammern vorgesehen, die mit der gleichen modifizierten Atmosphäre oder mit unterschiedlichen Atmosphären befüllt werden. Die Kammern sind dabei entweder fest im Behälter angeordnet oder können, in einer alternativen Ausgestaltung, in den Behälter eingestellt und bei Bedarf einzeln entnommen werden.

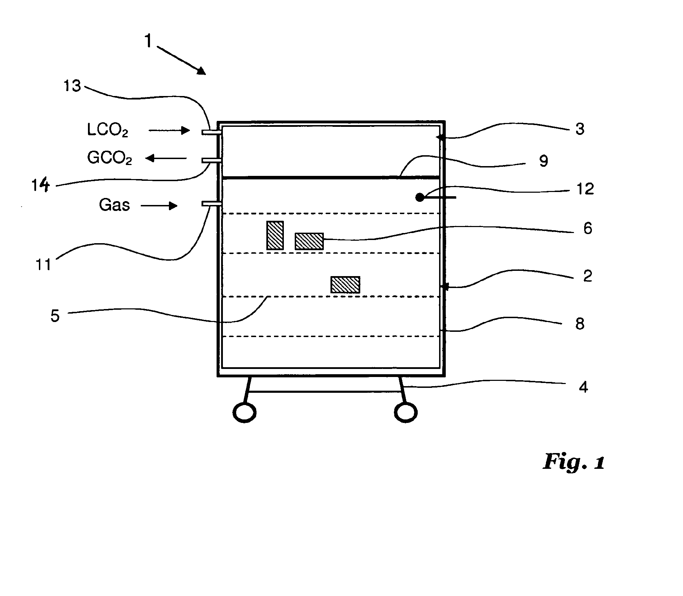

Anhand der Zeichnung soll ein Ausführungsbeispiel der Erfindung näher erläutert werden. Die einzige Zeichnung (Fig. 1) zeigt schematisch einen erfindungsgemäßen Behälter zum Transportieren von Lebensmitteln.

Der erfindungsgemäße Behälter 1 zum Transportieren von Lebensmitteln umfasst eine Aufbewahrungskammer 2 sowie ein Kühlmodul 3 und ist auf einem hier nicht weiter interessierenden mobilen Transportgestell 4 aufgenommen. Anstelle der Ausführung mit einem Transportgestell kann der Behälter auch als stapelbarer Behälter oder als Container ausgelegt sein, um einen besonders effizienten Transport der Ware mit geeigneten Fahrzeugen zu gewährleisten. Die Aufbewahrungskammer 2 ist mit mehreren Schubeinsätzen 5 zur Aufnahme von zum Transport bestimmten Waren 6 ausgestattet. Die Aufbewahrungskammer 2 und das Kühlmodul 3 werden von druckfesten und zur Außenwand des Behälters 1 hin thermisch isolierten Wänden 8 umschlossen. Vom Kühlmodul 3 ist die Aufbewahrungskammer 2 durch eine gasdichte, druckfeste, jedoch thermisch leitende Wand 9 getrennt. Die Aufbewahrungskammer 2 kann mittels einer hier nicht gezeigten, thermisch isolierten und druckfest ausgestalteten Tür gasdicht verschlossen werden. Weiterhin besitzt die Aufbewahrungskammer 2 einen Gasanschluss 11 zum Zuführen eines Gases oder Gasgemisches in die Aufbewahrungskammer 2 hinein und/oder zum Abpumpen von Gas aus der Aufbewahrungskammer 2 heraus. Über den Gasanschluss 11 kann somit nach der Beladung der Aufbewahrungskammer 2 mit Waren 6 eine kontrollierte oder modifizierte Atmosphäre erzeugt werden, und zwar entweder durch laufenden Gasaustausch ("Gas-Flushing"), also durch das Absaugen der Luft bei gleichzeitigem Einbringen der modifizierten Atmosphäre unter im wesentlichen gleich bleibendem Druck, oder durch Erzeugung eines Vakuums und anschließendes Einbringen der modifizierten Atmosphäre. Der anschließende Transport der Waren 6 erfolgt also unter einer kontrollierten oder modifizierten Atmosphäre, ohne dass es einer gesonderten Verpackung der Waren bedarf. Am Ankunftsort wird die Aufbewahrungskammer 2 geöffnet und die Waren werden entnommen. Der Behälter 2 steht sodann wieder für eine Beladung mit Waren zur Verfügung. Anstelle der modifizierten Atmosphäre kann auch ein Vakuum im Innern der Aufbewahrungskammer 2 für die Dauer des Transports erzeugt werden. Durch den Gasanschluss 11 kann die Atmosphäre in der Aufbewahrungskammer 2 auch während des Transports laufend oder in vorgegebenen Zeitabständen verändert werden; die Zusammensetzung der Atmosphäre kann auch in Abhängigkeit bestimmter Parameter wie Druck oder der Sauerstoffkonzentration geregelt werden, wobei die Parameter an geeigneten Messeinrichtungen 12 erfasst werden.

Bei dem Kühlmodul 3 handelt es sich um ein zur Aufnahme von Trockeneis bestimmtes Kühlmodul, wie es beispielsweise aus der EP 0 823 600 B1 bekannt ist. Das Kühlmodul 3 umfasst einen Innenbereich zur Aufnahme des Trockeneises sowie einen Anschluss 13 zum Zuführen von unter Druck stehendem flüssigem Kohlendioxid und einen Anschluss 14 zum Abführen von gasförmigem Kohlendioxid. Das Kühlmodul 3 wird in der Weise mit Trockeneis befüllt, dass flüssiges Kohlendioxid unter Druck aus einem hier nicht gezeigten Vorratsbehälter über den Anschluss 13 in den Innenbereich des Kühlmoduls 3 einströmt und dabei unter Entstehung von Kohleindioxidschnee und Kohlendioxidgas entspannt wird. Das entstehende Kohlendioxidgas wird über den Anschluss 14 und eine sich hieran anschließende Leitung abgeführt. Durch geeignete Einrichtungen, wie sie im Detail beispielsweise in der EP 0 823 600 B1 beschrieben werden, wird verhindert, dass der Trockeneisschnee nicht vom Gasstrom mitgerissen wird, sondern im Innenbereich des Kühlmoduls 3 verbleibt. Es befindet sich somit während des Transports eine bestimmte Menge Trockeneis im Kühlmodul 3, das langsam sublimiert und Kälte an die thermisch leitende Wand 9 abgibt. Durch thermischen Kontakt des im Innern der Aufbewahrungskammer 2 befindlichen Gases wird die Aufbewahrungskammer 2 und damit die darin befindlichen Waren 6 zuverlässig und anhaltend gekühlt.

In der Aufbewahrungskammer 2 des Behälters 1 können auch Adsorber angeordnet werden, die bei Bedarf Gase, beispielsweise Sauerstoff, CO₂ oder CO binden und somit die Atmosphäre in der Aufbewahrungskammer 2 auch bei atmenden Waren innerhalb vorgegebener Grenzen konstant halten. Die Aufbewahrungskammer 2 kann auch als Modul trennbar mit dem Behälter 1 verbunden sein. Ein Behälter 1 kann auch mit mehreren Aufbewahrungskammern ausgerüstet werden, in denen ggf. unterschiedliche modifizierte Atmosphären zum Einsatz kommen.

Der Behälter 1 ist nicht nur für den Transport von Lebensmitteln und deren Vorprodukte geeignet, sondern kann auch für andere Waren, bei denen der Transport unter modifizierter Atmosphäre vorteilhaft ist, eingesetzt werden, wie beispielsweise für bestimmte Chemikalien oder Pharmazeutika.

### Bezugszeichenliste

- 1.: Behälter
- 2.: Aufbewahrungkammer
- 3.: Kühlmodul
- 4.: Transportgestell
- 5.: Schubeinsatz
- 6.: Waren
- 7.: -
- 8.: thermisch isolierte Wand
- 9.: thermisch leitende Wand
- 10.: -
- 11.: Gasanschluss
- 12.: Messeinrichtung
- 13.: Anschluss
- 14.: Anschluss
- 15.: Messeinrichtung

## Patentansprüche

1. Behälter (1) zum Transportieren von Waren, insbesondere Lebensmitteln, unter kontrollierter oder modifizierter Atmosphäre, umfassend eine gasdicht verschließbare Kammer (2) zum Aufbewahren von zu transportierenden Waren (6), die mit wenigstens einem Gasanschluss (11) zum Verbinden mit einer externen Gasquelle oder mit einer Absaugeinrichtung ausgerüstet ist,
**dadurch gekennzeichnet, dass**
die Kammer (2) mit einer Kältequelle (3) thermisch verbindbar ist, wobei als Kältequelle (3) ein von der Kammer (2) durch eine gasdichte, druckfeste, jedoch thermisch leitende Wand (9) getrenntes Speichermodul (3) für ein kryogenes Kältemittel vorgesehen ist.

2. Behälter nach Anspruch 1, **dadurch gekennzeichnet, dass** als Kältequelle (3) ein Speichermodul (3) für Trockeneis vorgesehen ist.

3. Behälter nach Anspruch 1 oder 2, **dadurch gekennzeichnet, dass** die Kammer (2) zur Herstellung eines Vakuums druckfest ausgestaltet ist.

4. Behälter nach einem der vorhergehenden Ansprüche, **dadurch gekennzeichnet, dass** die Kammer (2) trennbar mit dem Behälter verbunden ist.

5. Behälter nach einem der vorhergehenden Ansprüche, **gekennzeichnet durch** mehrere gasdicht voneinander getrennte Kammern (2).

## Claims

1. Container (1) for the transportation of commodities, in particular foodstuffs, under a controlled or modified atmosphere, comprising a chamber (2), closable in a gas-tight manner, for the storage of commodities (6) to be transported, which chamber is equipped with at least one gas connection (11) for connecting to an external gas source or to a suction-extraction device, **characterized in that** the chamber (2) is connectable thermally to a cold source (3), the cold source (3) provided being an accumulator module (3) for a cryogenic refrigerant which is separated from the chamber (2) by a gas-tight, pressure-resistant, but thermally conductive wall (9).

2. Container according to Claim 1, **characterized in that** the cold source (3) provided is an accumulator module (3) for dry ice.

3. Container according to Claim 1 or 2, **characterized in that** the chamber (2) has a pressure-resistant configuration for the generation of a vacuum.

4. Container according to one of the preceding claims, **characterized in that** the chamber (2) is connected separably to the container.

5. Container according to one of the preceding claims, **characterized by** a plurality of chambers (2) separated from one another in a gas-tight manner.

## Revendications

1. Conteneur (1) pour transporter des marchandises, en particulier des denrées alimentaires, sous atmosphère contrôlée ou modifiée, comprenant une chambre (2) pouvant être fermée de façon étanche au gaz pour conserver des marchandises à transporter (6), qui est munie d'au moins un raccord de gaz (11) pour un raccordement à une source de gaz extérieure ou à un dispositif d'aspiration, **caractérisé en ce que** la chambre (2) peut être reliée thermiquement à une source de froid (3), dans lequel il est prévu comme source de froid (3) un module d'accumulation (3) pour un agent réfrigérant cryogénique, séparé de la chambre (2) par une paroi (9) étanche au gaz, résistant à la pression mais thermiquement conductrice.

2. Conteneur selon la revendication 1, **caractérisé en ce qu'**il est prévu comme source de froid (3) un module d'accumulation (3) pour de la neige carbonique.

3. Conteneur selon la revendication 1 ou 2, **caractérisé en ce que** la chambre (2) est résistante à la pression afin de créer un vide.

4. Conteneur selon l'une quelconque des revendications précédentes, **caractérisé en ce que** la chambre (2) est assemblée de façon séparable au conteneur.

5. Conteneur selon l'une quelconque des revendications précédentes, **caractérisé par** plusieurs chambres (2) séparées l'une de l'autre de façon étanche au gaz.
